# EUROPÄISCHE PATENTSCHRIFT

(11) **EP 1 618 776 B1**
(45) Veröffentlichungstag und Bekanntmachung des Hinweises auf die Patenterteilung: **12.05.2010**
(21) Anmeldenummer: 05015864.1
(22) Anmeldetag: 21.07.2005
(51) Int. Cl.: A01C 19/04

(54) **Sämaschine**
Seeder
Semoir

(30) Priorität: 21.07.2004 DE 102004035265
(43) Veröffentlichungstag der Anmeldung: 25.01.2006
(73) Patentinhaber: Amazonen-Werke H. Dreyer GmbH & Co. KG, 49205 Hasbergen (DE)
(72) Erfinder: Häfker, Gerd, 27305 Süstedt (DE)

(56) Entgegenhaltungen:
- EP-A- 1 163 831
- DE-U1- 8 817 220
- US-A- 4 036 154

## Beschreibung

Die Erfindung betrifft eine Sämaschine gemäß des Oberbegriffes des Patentanspruches 1.

Eine derartige Sämaschine ist in dem Prospekt Amazone AD-P + Avant mit Druckvermerk MI032 / D685 (D) 03.03 in Form des Ausführungsmodels AD-P Spezial bekannt. Bei dieser Sämaschine wird unmittelbar von der Abtriebswelle des dem Antriebsrad zugeordneten Winkelgetriebes über eine Gelenkwelle die der Antriebswelle des Dosiergetriebes zugeordnete Welle angetrieben. Das Kreuzgelenk der Gelenkwelle befindet sich in einem großen Abstand zur Schwenkachse des das Antriebsrad tragenden Tragearmes. Durch die Auf- und Abbewegung des Antriebsrades ergeben sich Änderungen der Winkelgeschwindigkeit durch unterschiedliche Abwinkelungen der Kreuzgelenke der Gelenkwelle und der Änderung der Neigung der Abtriebswelle des Winkelgetriebes und der Eingangswelle des anderen Winkelgetriebes zueinander. Dies hat eine ungleichmäßige Dosierung zur Folge.

Der Erfindung liegt die Aufgabe zugrunde, mit einfachen Maßnahmen einen gleichmäßigen Antrieb der Dosierorgane bzw. des dem Dosierorgan zugeordneten Einstellgetriebes mit einfachen Maßnahmen zu schaffen.

Diese Aufgabe wird erfindungsgemäß durch die kennzeichnenden Merkmale des Patentanspruches 1 gelöst. Infolge dieser Maßnahmen bildet in seitlicher Betrachtung der Antriebsstrang inkl. der Gelenkwelle eine Gerade. Dies bedeutet, dass die Beschleunigung bzw. die negativen Beschleunigungen durch die Kreuzgelenke der Gelenkwelle nahezu konstant sind, weil der Betrag der Abwinkelung der beiden Kreuzgelenke gleich ist. Der Drehpunkt des Antriebsrades liegt im Schnittpunkt des Kreuzgelenkes der Gelenkwelle. Im Betrieb kommt es also zu keiner Längenänderung der Gelenkwelle.

In einer bevorzugten Ausführungsform ist das Universalgelenk als Kreuzgelenk ausgebildet.

Eine vorteilhafte und einfache Anordnung der Anordnung der Abtriebswelle sowie deren Lagerung und Anordnung des dieser Antriebswelle zugeordneten Universalgelenkes wird dadurch erreicht, dass parallel zu dem Tragarm die Abtriebswelle des dem Antriebsrad zugeordneten Winkelgetriebes verlaufend angeordnet ist, dass am Ende der Antriebswelle das Universalgelenk angeordnet ist.

Eine vorteilhafte Lagerung der Abtriebswelle ergibt sich dadurch, dass die Abtriebswelle an dem Tragarm zwischen dem Universalgelenk und dem Gehäuse des Winkelgetriebes mittels eines Lagers gelagert ist.

Eine einfache verschiebbare Anordnung des Tragarmes, um das Antriebsrad in eine vorteilhafte Antriebsstellung und in eine vorteilhafte Transportstellung bringen zu können, wird dadurch erreicht, dass an dem Tragarm ein in Richtung der Maschinenmitte ragendes Tragrohr befestigt ist, dass das Tragrohr in der Schiebeführung verschiebbar ist.

Eine einfache Verschiebung des Antriebsrades ergibt sich dadurch, dass an dem Rahmen ein Lagerrohr der Schiebeführung befestigt ist, dass das Tragrohr innerhalb des Lagerrohres verschiebbar angeordnet ist.

Eine einfache Verstellung des Antriebsrades von Arbeitsstellung in Transportstellung und umgedreht wird dadurch erreicht, dass der Tragarm mit dem Antriebsrad in der Schiebeführung nach außen in eine Arbeitsstellung ausziehbar und in Richtung Maschinenmitte in eine Transportstellung einziehbar ist. Um in einfacher Weise den Tragarm mit dem Antriebsrad in Arbeitsstellung gegen den Boden zu drücken, so dass ein sicherer Antrieb durch das Antriebsrad und ein ständiger Bodenkontakt des Antriebsrades gegeben ist, wird dadurch erreicht, dass zwischen dem Lagerrohr und dem Rahmen der Maschine eine Federeinrichtung angeordnet ist.

Des weiteren ist vorgesehen, dass der Tragarm mit dem Antriebsrad in eine Abdrehposition bringbar ist. Hierdurch ist es möglich, dass in einfacher Weise eine Abdrehprobe durchgeführt werden kann, wobei die gleichen Antriebsbedingungen herrschen, als wenn das Antriebsrad sich in Arbeitsposition befindet.

Weitere Einzelheiten der Erfindung sind mit den übrigen Unteransprüchen, der Beispielsbeschreibung und den Zeichnungen zu entnehmen. Hierbei zeigen
- Fig. 1: eine Sämaschine in perspektivischer Darstellung und in Prinzipdarstellung,
- Fig. 2: die Anordnung des Antriebsrades in Arbeitsstellung und der untere hintere Bereich der Sämaschine in Seitenansicht,
- Fig. 3: die Anordnung des Antriebsrades in Arbeitsstellung und der untere hintere Bereich der Sämaschine in Rückansicht,
- Fig. 4: die Anordnung des Antriebsstranges mit Antriebsrad in Arbeitsstellung und in perspektivischer Darstellung,
- Fig. 5: die Kupplung der Antriebswelle des Antriebsstranges in Arbeitsstellung und in perspektivischer Darstellung,
- Fig. 6: ein Teil des Antriebsstranges im Bereich der Schwenkachse des Tragarmes in perspektivischer Darstellung,
- Fig. 7: die Anordnung des Antriebsstranges in Arbeitsstellung des Antriebsrades im Bereich der Schwenkachse in perspektivischer Darstellung,
- Fig. 8: das Antriebsrad in Transportstellung in Seitenansicht,
- Fig. 9: das Antriebsrad in Transportstellung mit dem unteren Bereich der Sämaschine in perspektivischer Darstellung,
- Fig. 10: den Antriebsstrang im Bereich der Schwenkachse in perspektivischer Darstellung,
- Fig. 11: den Antriebsstrang mit in Abdrehposition sich befindlichen Antriebsrad in perspektivischer Darstellung und
- Fig. 12: Antriebsstrang mit sich in Abdrehstellung befindlichen Antriebsrad in Seitenansicht.

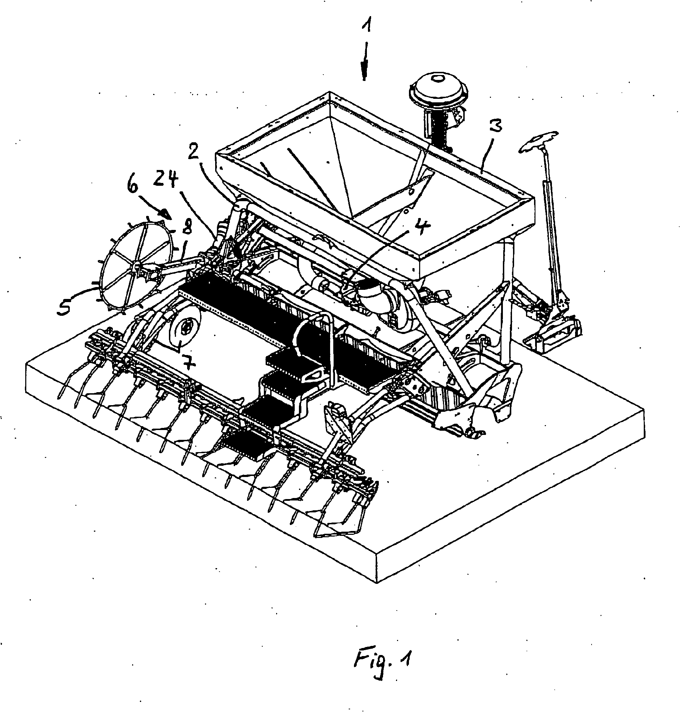

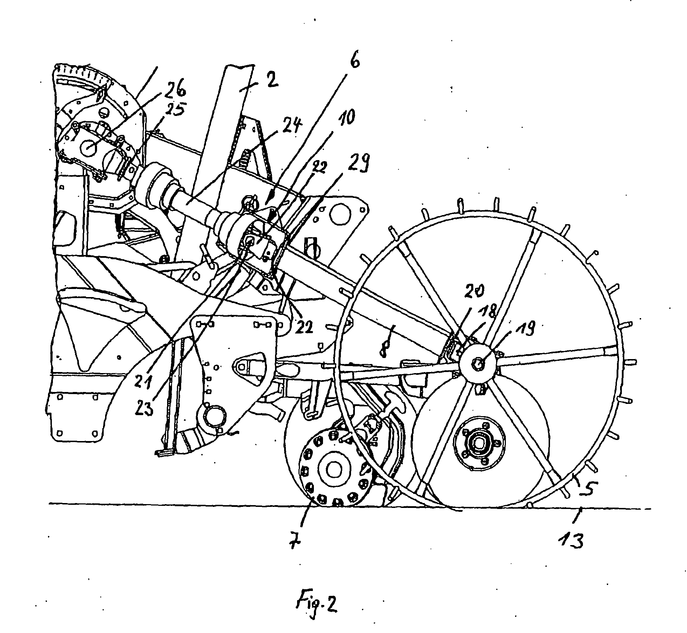

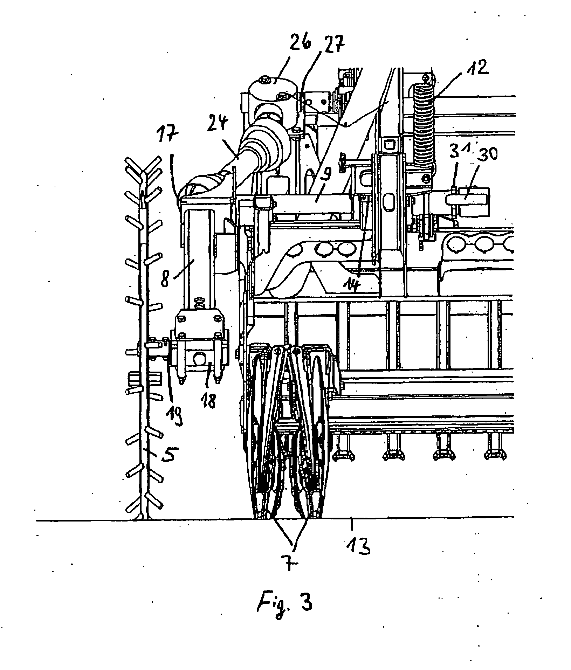

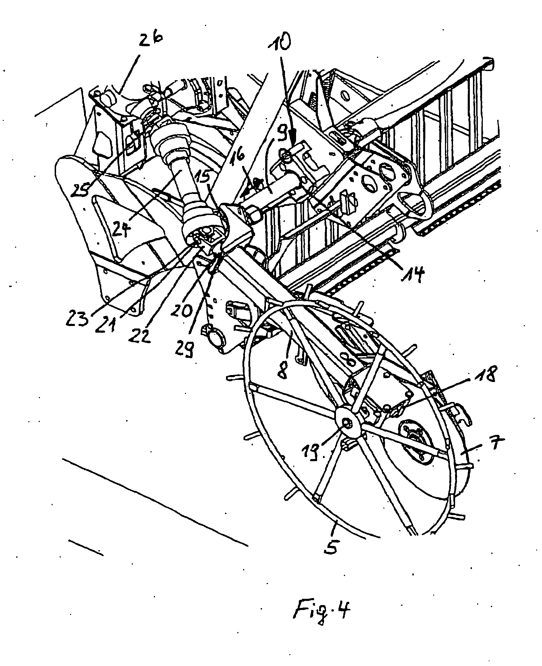

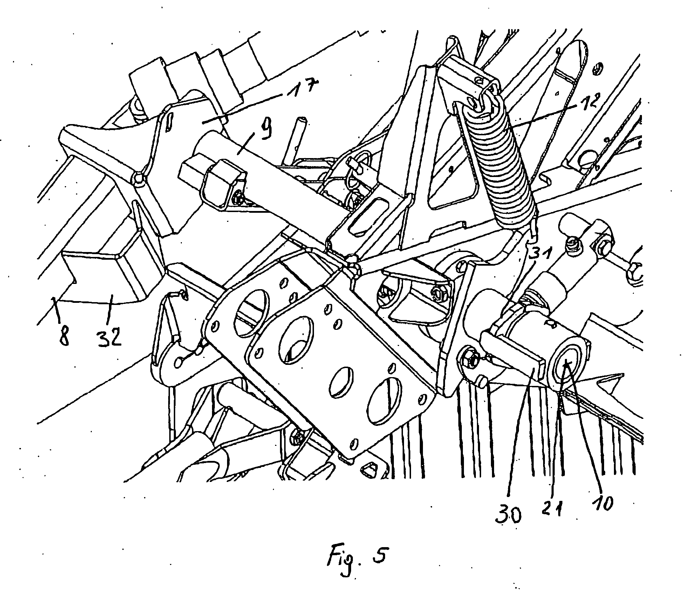

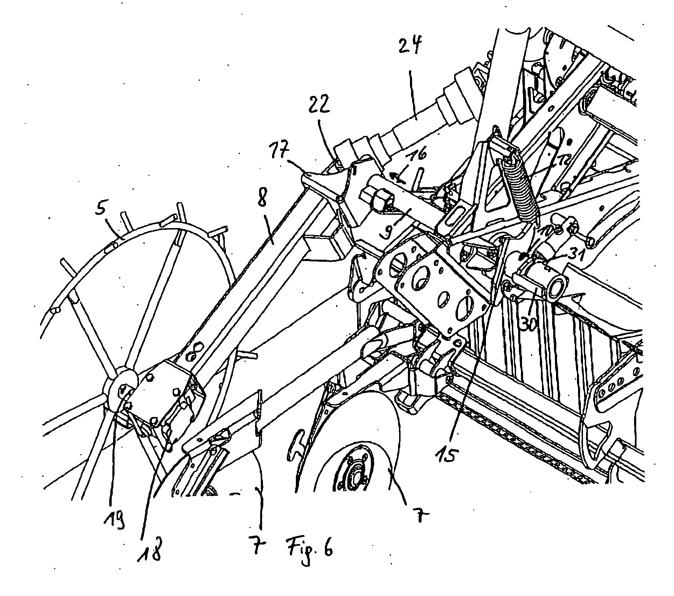

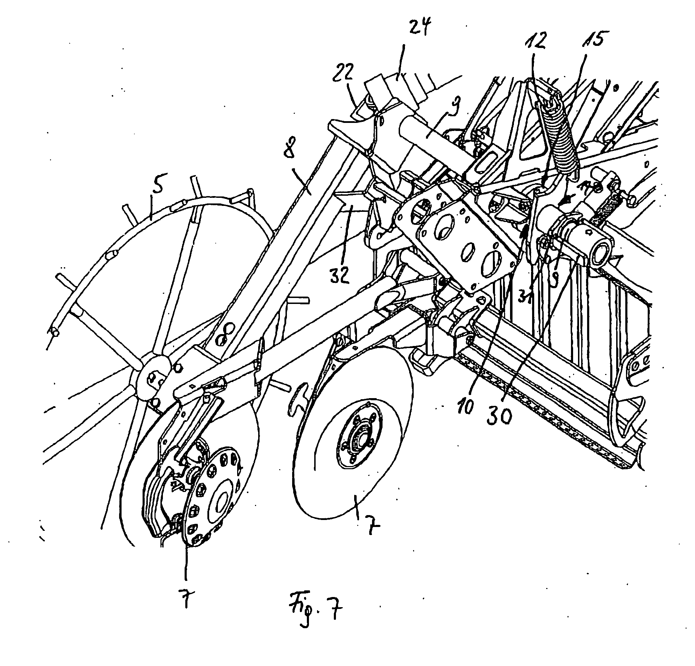

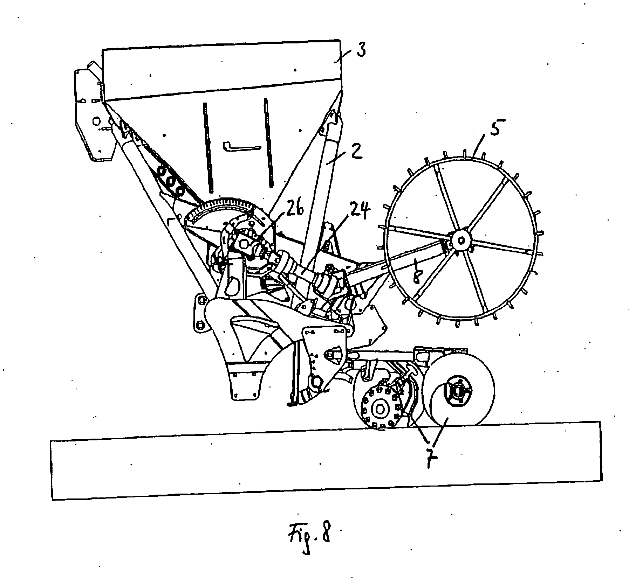

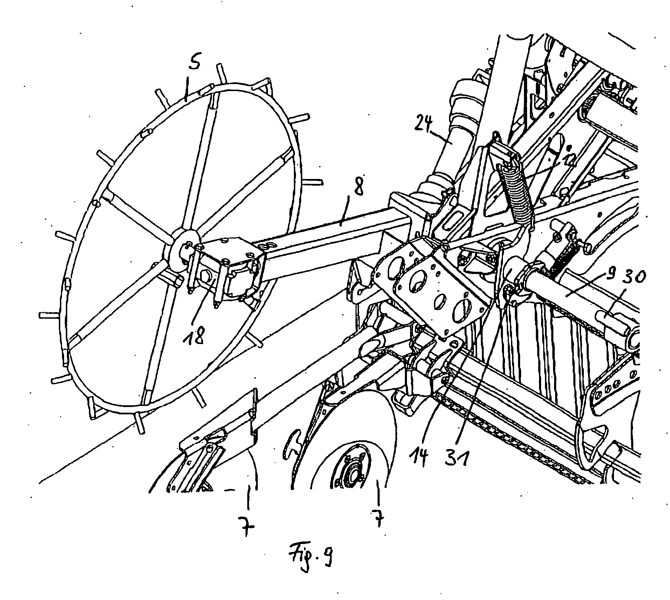

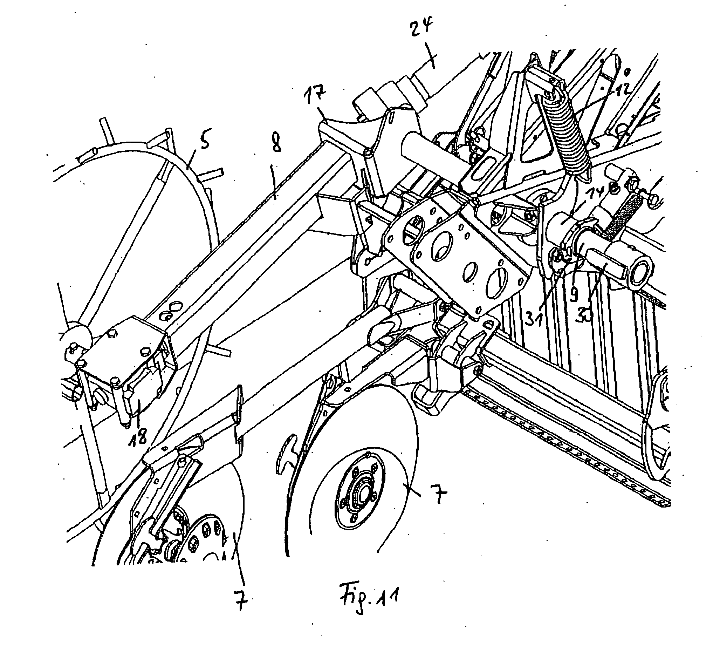

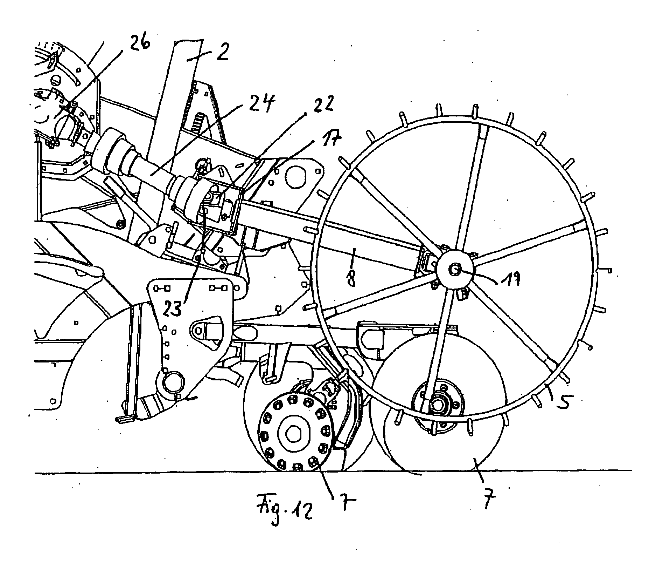

Die als Aufbausämaschine ausgebildete Sämaschine 1 weist einen Rahmen 2, Vorratsbehälter 3 und das zugeordnete Dosierorgan 4 auf und wird auf eine nicht dargestellte Bodenwalze einer Bodenbearbeitungskombination aufgebaut. Das Dosierorgan 4 wird von einem seitlich des Rahmens 2 angeordneten Antriebsrad 5 über einen Antriebsstrang 6 angetrieben. Das Antriebsrad 5 ist in Arbeitsstellung beabstandet zu dem Rahmen 2 und somit seitlich des Rahmens 2 und der Säschare 7 angeordnet. Das Antriebsrad ist drehbar an einem Tragarm 8 angelenkt. An dem Antriebsrad 5 abgewandten Ende des Tragarmes befindet sich das Tragrohr 9. Der Tragarm 8 ist über dem Tragrohr 9 und der am Rahmen 2 angeordneten Lagerung 10 um die Drehachse 11 in aufrechter Ebene bewegbar angeordnet. Das Antriebsrad 5 ist mittels dem am Rahmen 2 angeordneten Schwenklager 10 in aufrechter Ebene bewegbar um mittels der Feder 12 in Richtung des Bodens 13 belastet. Das Tragrohr 9 ist in dem Lagerrohr 14 des Schwenkgelenkes 15 in Doppelpfeilrichtung 16 hin und her verschiebbar angeordnet, um das Antriebsrad 5 mit dem Tragarm 8 in die in Fig. 1-7 dargestellte Arbeitsposition, in die in den Fig. 8 - 10 dargestellte Transportposition und in die in den Fig. 11 und 12 dargestellte Abdrehstellung zu bringen. In der in Fig. 1-7 dargestellten Arbeitsstellung befindet sich das Antriebsrad 5 seitlich neben dem Rahmen 2 und außerhalb der gesetzlich zulässigen Transportbreite der Sämaschine für den Transport auf öffentlichen Straßen und Wegen, während es sich in der in den Fig. 7-9 dargestellten eingezogenen Position innerhalb der gesetzlich zulässigen Transportbreite befindet. Der Tragarm 8 ist am oberen Ende an einer Halterung 17 befestigt, welche mit dem in Maschinenmitte ragenden Tragrohr 9 verbunden ist. Das Tragrohr 9 ist in einer Schiebeführung des Schwenklagers 10 gelagert. Somit ermöglicht das Schwenkgelenk 10 eine quer zur Fahrtrichtung ermöglichende Schiebebewegung zulassende Verschiebung des Tragrohres 9 mit dem Tragarm 8 und dem Antriebsrad 5.

An dem unteren Ende des Tragarmes B ist das Winkelgetriebe 18 angeordnet. Auf der Eingangswelle 19 des Winkelgetriebes 18 ist das Antriebsrad 5, welches als Sporenrad ausgebildet ist, drehfest angeordnet. Die Ausgangswelle 20 des Winkelgetriebes 18 weist eine derartige Länge auf, dass sie zumindest annähernd bis zur Schwenkachse 21 des Schwenkgelenkes 10 reicht. An dem Ende der Ausgangswelle 20 ist das als Universalgelenk ausgebildete Kreuzgelenk 22 derart angeordnet, dass der Mittelpunkt 23 dieses Kreuzgelenkes 22 zumindest annähernd mit der Schwenkachse 21 des Schwenkgelenkes 10 fluchtet. Das Kreuzgelenk 22 ist Bestandteil einer Gelenkwelle 24, welche mit der Eingangswelle 25 eines weiteren Winkelgetriebes 26 verbunden ist. Dieses Winkelgetriebe 26 ist an dem Rahmen 2 der Maschine angeordnet. Die Ausgangswelle 27 dieses Winkelgetriebes ist mit der Antriebseinrichtung des Dosierorgans verbunden. In dieser Antriebseinrichtung ist noch das Einstellgetriebe 28 angeordnet.

Da der Mittelpunkt 23 des Kreuzgelenkes 22 mit der Schwenkachse 21 des Schwenkgelenkes 10, um welches der Tragarm 8 mit dem Antriebsrad sich während des Arbeitseinsatzes durch dem Folgen der Bodenkontur auf und ab bewegt, fluchtet, ergeben sich keine wesentlichen Längenänderungen der teleskopierbaren Gelenkwelle 24 und keine Änderungen der Winkelgeschwindigkeit durch die verschiedenen Abwinkelungen des Kreuzgelenkes 22.

Die Abtriebswelle 20 des dem Antriebsrad 5 zugeordneten Winkelgetriebes 18 ist parallel zu dem Tragarm 8 laufend angeordnet. Die Abtriebswelle 20 ist an dem Tragarm 8 zwischen dem Universalgelenk 22 und dem Gehäuse des Winkelgetriebes 18 mittels des Lagers 29 gelagert. Dieses Lager 29 ist dichter am Schwenkgelenk 10 als am Winkelgetriebe 18 angeordnet.

Wie bereits erwähnt ist an dem Tragarm 8 ein in Maschinenmitte ragendes Tragrohr 9 befestigt, welches in der als Lagerrohr 14 ausgebildete Schiebeführung des Schwenkgelenkes 10 verschiebbar geführt ist. An dem Rahmen 1 ist das Lagerrohr 14 der Schiebeführung befestigt, in welchem das Tragrohr 9 verschiebbar angeordnet ist. Das Tragrohr 9 weist auf seiner dem Tragarm 8 abgewandten Ende ein Kupplungsteil 30 auf, welches mit dem an dem Tragrohr 9 angeordneten Kuppelelementen 31 gekuppelt ist, wenn der Tragarm 8 in Arbeitsposition ausgewogen ist, wie Fig. 1-7 zeigen. An dem Tragrohr 9 greift ein Federelement 12, welches zwischen dem Tragrohr 9 und dem Rahmen 2 angeordnet ist an, so dass in Arbeitsposition der ausgezogene Tragarm 8 mit dem Antriebsrad 5 gegen den Boden 13 gedrückt wird.

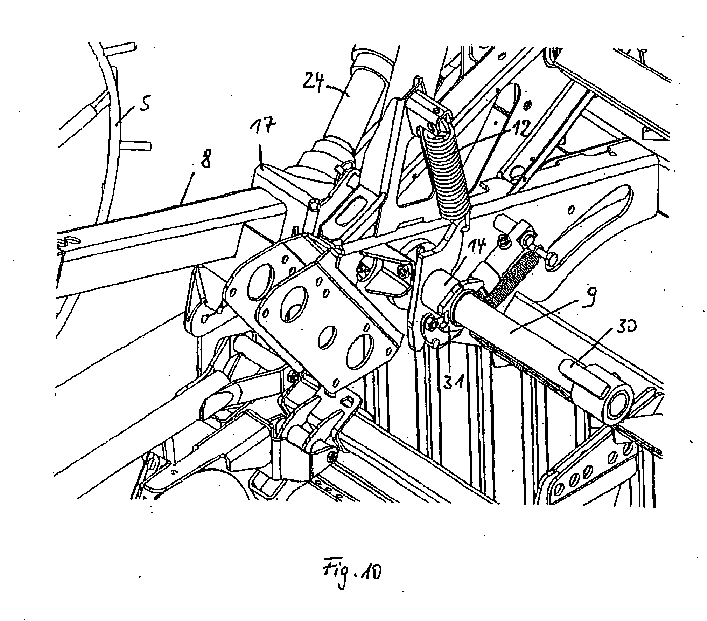

In nicht ganz ausgezogener Stellung, d.h. wenn der Tragarm 8 etwas eingeschoben ist, werden die Kuppelelemente 30, 31 entkuppelt, so dass der Tragarm 8 mit dem Antriebsrad 5 nicht mehr gegen den Boden 13 gedrückt wird. Der Tragarm 8 liegt dann auf ein am Rahmen 2 angebrachten Anschlag 32 auf, wie Fig. 10-11 zeigen. Hierbei befindet sich dann der Tragarm 8 mit dem Antriebsrad 15 in Abdrehposition, dies bedeutet, dass das Antriebsrad 5 bei auf dem Boden abgestellter, d.h. abgesenkter Sämaschine 1 keinen Bodenkontakt hat, so dass zum Abdrehen das Antriebsrad 15 frei von Hand gedreht werden kann.

Um das Antriebsrad 5 in Transportposition, d.h. innerhalb der Arbeitsbreite zu bringen, wird das Antriebsrad mit dem Tragarm 8 angehoben und die in den Fig. 8-10 dargestellte Transportposition in Richtung Maschinenmitte geschoben.

Mittels nicht dargestellter Mittel wird das Tragrohr 9 bzw. der Tragarm 8 in der Arbeits- und in der Transportstellung des Antriebsrades verriegelt, um ein ungewolltes verstellen zu vermeiden.

## Patentansprüche

1. Sämaschine mit einem Rahmen (2), Vorratsbehälter (3) und zugeordneten Dosierorgan (4), welches von einem auf dem Boden abrollenden Antriebsrad (5) über einen Antriebsstrang (6) angetrieben wird, wobei das Antriebsrad in Arbeitsstellung seitlich neben dem Rahmen (2) und den Säelementen (7) angeordnet ist, wobei das Antriebsrad (5) mittels eines am Rahmen (2) mit einem eine horizontale Drehachse aufweisenden Schwenkgelenk (15) in aufrechter Ebe bewegbaren Tragarms (8) angelenkt ist, wobei das Schwenkgelenk (15) eine quer zur Fahrtrichtung ermöglichende Schiebebewegung zulassende Schiebeführung aufweist, wobei der Antriebsstrang zwei Winkelgetriebe (18, 26) und eine zwischen den Winkelgetrieben (18, 26) angeordnete jeweils an ihren Enden ein Universalgelenk aufweisende Gelenkwelle (24) aufweist, **dadurch gekennzeichnet, dass** der Mittelpunkt (23) des dem Antriebsrad (5) benachbarten Universalgelenkes (22) zumindest annähernd mit der Schwenkachse (21) des Schwenkgelenkes (10) fluchtet.

2. Sämaschine nach Anspruch 1, **dadurch gekennzeichnet, dass** Universalgelenk als Kreuzgelenk (22) ausgebildet ist.

3. Sämaschine nach Anspruch 1, **dadurch gekennzeichnet, dass** parallel zu dem Tragarm (8) die Abtriebswelle (20) des dem Antriebsrad (5) zugeordneten Winkelgetriebes (18) verlaufend angeordnet ist, dass am Ende der Abtriebswelle (20) das Universalgelenk (22) angeordnet ist.

4. Sämaschine nach Anspruch 3, **dadurch gekennzeichnet, dass** die Abtriebswelle (22) an dem Tragarm (8) zwischen dem Universalgelenk (22) und dem Gehäuse des Winkelgetriebes (18) mittels eines Lagers (29) gelagert ist.

5. Sämaschine nach Anspruch 3, **dadurch gekennzeichnet, dass** das die Abtriebswelle (22) lagernde Lager (29) dichter am Schwenkgelenk (10) als am Winkelgetriebe (18) gelagert ist.

6. Sämaschine nach Anspruch 1, **dadurch gekennzeichnet, dass** an dem Tragarm (8) ein in Richtung der Maschinenmitte ragendes Tragrohr (9) befestigt ist; dass das Tragrohr (9) in der Schiebeführung (10) verschiebbar ist.

7. Sämaschine nach einem oder mehreren der vorstehenden Ansprüche, **dadurch gekennzeichnet, dass** an dem Rahmen (2) ein Lagerrohr (14) der Schiebeführung (10) befestigt ist, dass das Tragrohr (9) innerhalb des Lagerrohres (14) verschiebbar angeordnet ist.

8. Sämaschine nach einem oder mehreren der vorstehenden Ansprüche, **dadurch gekennzeichnet, dass** das Lagerrohr (14) um seine Längsachse mittels Lagerelementen verdrehbar an dem Rahmen (2) angeordnet ist.

9. Sämaschine nach einem oder mehreren der vorstehenden Ansprüche, **dadurch gekennzeichnet, dass** das Tragrohr (9) um seine Längsachse verdrehbar in dem Lagerrohr (14) angeordnet ist.

10. Sämaschine nach einem oder mehreren der vorstehenden Ansprüche, **dadurch gekennzeichnet, dass** der Tragarm (8) mit dem Antriebsrad (5) in der Schiebeführung (10) nach außen in eine Arbeitsstellung ausziehbar und in Richtung Maschinenmitte in eine Transportstellung einziehbar ist.

11. Sämaschine nach einem oder mehreren der vorstehenden Ansprüche, **dadurch gekennzeichnet, dass** Mittel zum Verriegeln des Tragrohres (9) in der Arbeits- und in der Transportstellung des Antriebsrades (5) vorgesehen sind.

## Claims

1. Seed drill having a frame (2), hopper (3) and associated metering member (4), which is driven by a drive wheel (5) rolling over the ground by means of a power train (6), wherein the drive wheel, in the operating position, is located laterally next to the frame (2) and the sowing elements (7), wherein the drive wheel (5) is pivotably mounted by means of a support arm (8) that is moveable in the upright plane on the frame (2) by way of a pivot joint (15) that has a horizontal axis of rotation, wherein the pivot joint (15) has a sliding guide that permits a sliding movement enabling movement transversely in relation to the direction of travel, wherein the power train has two bevel gears (18, 26) and one pivot shaft (24) that is located between the bevel gears (18, 26) and has a universal joint in each case at its ends, **characterized in that** the central point (23) of the universal joint (22) adjacent the drive wheel (5) is in alignment at least approximately with the pivotal axis (21) of the pivot joint (10).

2. Seed drill according to Claim 1, **characterized in that** the universal joint is realized as Cardan joint (22).

3. Seed drill according to Claim 1, **characterized in that** the driven shaft (20) of the bevel gear (18) associated with the drive wheel (5) is located extending parallel to the support arm (8), **in that** the universal joint (22) is located at the end of the driven shaft (20).

4. Seed drill according to Claim 3, **characterized in that** the driven shaft (22) is mounted on the support arm (8) between the universal joint (22) and the housing of the bevel gear (18) by means of a bearing (29).

5. Seed drill according to Claim 3, **characterized in that** the bearing (29) supporting the driven shaft (22) is mounted closer to the pivot joint (10) than to the bevel gear (18).

6. Seed drill according to Claim 1, **characterized in that** a support tube (9) projecting in the direction of the machine centre is secured to the support arm (8), **in that** the support tube (9) is displaceable in the sliding guide (10).

7. Seed drill according to one or more of the preceding claims, **characterized in that** a bearing tube (14) of the sliding guide (10) is secured to the frame (2), **in that** the support tube (9) is located so as to be displaceable inside the bearing tube (14).

8. Seed drill according to one or more of the preceding claims, **characterized in that** the bearing tube (14) is located on the frame (2) so as to be rotatable about its longitudinal axis by means of bearing elements.

9. Seed drill according to one or more of the preceding claims, **characterized in that** the support tube (9) is located in the bearing tube (14) so as to be rotatable about its longitudinal axis.

10. Seed drill according to one or more of the preceding claims, **characterized in that** the support arm (8) with the drive wheel (5) in the sliding guide (10) is extendable outwards into an operating position and is retractable in the direction of the machine centre into a transport position.

11. Seed drill according to one or more of the preceding claims, **characterized in that** means are provided for locking the support tube (9) in the operating position and in the transport position of the drive wheel (5).

## Revendications

1. Semoir comportant un châssis (2), un réservoir (3) et un organe de dosage (4) associé, cet organe étant entraîné par l'intermédiaire d'une ligne de transmission (6) par une roue d'entraînement (5) roulant sur le sol,
- la roue d'entraînement (5) est installée en position de travail à côté du châssis (2) et des éléments de semoir (7),
- la roue d'entraînement (5) est articulée par l'intermédiaire d'un bras de support (8) mobile dans un plan vertical, avec une articulation de basculement (15) ayant un axe de rotation horizontal,
- l'axe de basculement (15) a un guide de coulissement autorisant un mouvement de coulissement transversal à la direction de déplacement,
- la ligne de transmission a deux transmissions d'angle (18, 26), et un arbre articulé (24) entre les transmissions d'angle (18, 26) avec un joint de cardan, à chacune de ses extrémités,
**caractérisé en ce que**
le centre (23) du joint de cardan (22) voisin de la roue d'entraînement (5) est au moins sensiblement aligné sur l'axe de basculement (21) de l'articulation de basculement (10).

2. Semoir selon la revendication 1,
**caractérisé en ce que**
le joint à cardan est un joint à croisillon (22).

3. Semoir selon la revendication 1,
**caractérisé en ce que**
l'arbre de sortie (20) de la transmission d'angle (18) de la roue d'entraînement (5) est parallèle au bras de support (8), et le joint de cardan (22) est à l'extrémité de l'arbre de sortie (20).

4. Semoir selon la revendication 3,
**caractérisé en ce que**
l'arbre de sortie (22) est monté sur le bras de support (8) entre le joint de cardan (22) et le boîtier de la transmission d'angle (18) par l'intermédiaire d'un palier (29).

5. Semoir selon la revendication 3,
**caractérisé en ce que**
le palier (29) de l'arbre de sortie (22) est situé plus près de l'articulation de basculement (15) que la transmission d'angle (18).

6. Semoir selon la revendication 1,
**caractérisé par**
un tube de support (9) tourné en direction du milieu de semoir est fixé au bras de support (8), et le tube de support (9) est coulissant dans le guide coulissement (10).

7. Semoir selon l'une des revendications précédentes,
**caractérisé par**
un tube de palier (14) du guide de coulissement (10) fixé au châssis (2), le tube de support (9) étant logé de manière coulissante dans le tube de palier (14).

8. Semoir selon l'une des revendications précédentes,
**caractérisé en ce que**
le tube de palier (14) est monté à rotation autour de son axe longitudinal par l'intermédiaire d'éléments de palier sur le châssis (2).

9. Semoir selon l'une des revendications précédentes,
**caractérisé en ce que**
le tube de support (9) est monté dans le tube de palier (14) de façon à pouvoir tourner autour de son axe longitudinal.

10. Semoir selon l'une des revendications précédentes,
**caractérisé en ce que**
le bras de support (8) peut être tiré vers l'extérieur en position de travail avec la roue d'entraînement (5) dans le guide de coulissement (10), et il peut être rétracté vers le milieu du semoir en position de transport.

11. Semoir selon l'une des revendications précédentes,
**caractérisé par**
des moyens de verrouillage du tube de support (9) en position de travail et en position de transport de la roue d'entraînement (5).
